## Europäisches Patentamt
## European Patent Office
## Office européen des brevets

(19)

(11) Veröffentlichungsnummer: **0 109 659**
**B1**

(12) # EUROPÄISCHE PATENTSCHRIFT

(45) Veröffentlichungstag der Patentschrift:
23.07.86

(51) Int. Cl.⁴: **B 60 R 13/06**

(21) Anmeldenummer: **83111486.3**

(22) Anmeldetag: **17.11.83**

(54) **Durch Organopolysiloxan-Elastomer gebildete Verbindung einer Fensterscheibe mit dem Rahmen.**

(30) Priorität: **19.11.82 DE 3242873**

(43) Veröffentlichungstag der Anmeldung:
**30.05.84 Patentblatt 84/22**

(45) Bekanntmachung des Hinweises auf die Patenterteilung:
**23.07.86 Patentblatt 86/30**

(84) Benannte Vertragsstaaten:
**DE FR GB IT**

(56) Entgegenhaltungen:
**DE-B-2 838 477**
**JP-A-54 135 840**
**US-A-3 652 380**
**US-A-3 881 290**
**US-A-4 092 812**

**PATENTS ABSTRACTS OF JAPAN**

(73) Patentinhaber: **WACKER- CHEMIE GMBH,**
**Prinzregentenstrasse 22, D-8000 München 22 (DE)**

(72) Erfinder: **Craubner, Ingo, Dr, Dipl.- Chem.,**
**Nederlingerstrasse 31a, D-8000 München 19 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 109 659 B1

LIBER, STOCKHOLM 1986

## Beschreibung

Durch Organopolysiloxan-Elastomer gebildete Verbindungen von Fensterscheiben mit dem Rahmen, insbesondere von Fahrzeugkarosserien, sind bereits bekannt. Hierzu wird auf DE-B-2838447, bekannt gemacht am 16.8.79, BASF Farben + Fasern AG, verwiesen.

Aufgaben der Erfindung sind insbesondere, bei der Verbindung der Fensterscheibe mit dem Rahmen ohne die Vorrichtungen aus-zukommen, welche die Fensterscheibe beim Verkleben mit dem Rahmen an der gewünschten Stelle halten und nach dem Festwerden des Klebstoffs wieder entfernt werden müssen und ohne die angefeuchtete Rundschnur von DE-B-2838447 auszukommen, also das Herstellen einer Verbindung der Fensterscheiben mit dem Rahmen gegenüber dem bisherigen Stand der Technik zu erleichtern. Diese Aufgaben werden durch die Erfindung gelöst.

Gegenstand der Erfindung ist eine durch Organopolysiloxan-Elastomer gebildete Verbindung einer Fensterscheibe mit dem Rahmen, insbesondere einer Fahrzeugkarosserie dadurch gekennzeichnet, daß sie aus einem vor dem Einsetzen der Fensterscheibe in den Rahmen auf dieser Scheibe vernetzten und am Rand dieser Scheibebefindlichen Profil aus Organopolysiloxan-Elastomer mit einer nach außen geöffneten Nut, in die der Rahmen eingesetzt und im der gegebenenfalls dieser Rahmen mit dem Profil aus Organopolysiloxan-Elastomer durch bei Raumtemperatur zu einem Elastomeren vernetzbaren Organopolysiloxanmasse verklebt ist, besteht.

Die beigefügte schematische Zeichnung zeigt eine Ausführungsform der Erfindung. Dabei stellt (1) den Querschnitt des Profils, (2) einem Teil des Querschnitts der Fensterscheibe und (3) den Querschnitt der Nut bzw. der zu einem Elastomeren vernetzbaren bzw. vernetzten Organopolysiloxanmasse, die in die Nut eingefüllt werden kann, dar.

Vorzugsweise besteht das Profil aus Organopolysiloxan das auf der Fensterscheibe vor dem Einsetzen dieser Scheibe am Rand der Scheibe zu einem Elastomer vernetzt ("aufvulkanisiert") wurde, aus mittels freier Radikale oder bei erhöhter Temperatur durch Anlagerung von Si-gebundenem Wasserstoff an aliphatische Mehrfachbindungen vernetztem Organopolysiloxan. Es ist also vorzugsweise aus sogenanntem "heißvulkanisierendem Siliconkautschuk" hergestellt, weil derartiges Organopolysiloxan besonders hohe Weiterreiß-, Zug- und Bruchfestigkeit hat. Falls erwünscht, kann aber das Profil, das auf der Fensterscheibe vor dem Einsetzen dieser Scheibe am Ränd der Scheibe vernetzt wurde, aus bei Raumtemperatur zu einem Elastomer vernetzbarer Organopolysiloxanmasse hergestellt sein.

Vor dem Aufbringen der das Profil ergebenden, zu einem Elastomer vernetzbaren Organopolysiloxammasse kann auf die Fläche, auf die diese Masse aufgetragen wird, eine handelsübliche Grundierung aufgetragen werden. Die zum Elastomer vernetzende Organopolysiloxanmasse kann aber auch in bekannter Weise Silan oder Siloxan mit haftvermittelnden Gruppen enthalten, die eine solche Grundierung unnötig machen.

Die Formgebung und Vernetzung der zu einem Elastomer vernetzbaren Organopolysiloxamasse bei der Herstellung des auf der Fensterscheibe vernetzten Profils erfolgt vorzugsweise in einer Spritzguß- oder Pressform.

Vorzugsweise beträgt die Breite der Nutwandung und des übrigen Profils 1 mm bis 5 mm.

Vorzugsweise beträgt die Tiefe der Nut 5 - 20 mm. Richtung und Weite der Nut müssen natürlich der Richtung und Dicke des Rahmens entsprechen.

Das Profil kann beim Einsetzen in den Rahmen "Griffe" in Form von z.B. Rundschnüren, die durch Angüsse z.B. der Spritzgußform gebildet sein können, aufweisen, um das Wegbiegen einer Nutwandung beim Einsetzen des Rahmens im die Nut oder das Einbringen von bei Raumtemperatur zu einem Elastomer vernetzender Masse oder beides zu erleichtern. Diese "Griffe" können, nachdem sie ihren Zweck erfüllt haben, ohne weiteres abgeschnitten werden.

Bei der bei Raumtemperatur zu einem Elastomeren vernetzenden Organopolysiloxanmasse kann es sich um eine solche handeln, die durch Vermischen von mindestens zwei Bestandteilen oder Bestandteilgemischen erst mehr oder weniger kurz vor der endgültigen Verwendung bereitet wird, also ein sogenanntes "Zweikomponentensystem" darstellt, oder um ein sogenanntes "Einkompontensystem" handeln, also z.B. um eine unter Ausschuß von Wasser lagerfähige, bei Zutritt von Wasser zu einem Elastomer vernetzbare Masse auf Grundlage von Organopolysiloxan. Viele derartige Einkompontensysteme und Zweikomponentensysteme sind in der Literatur beschreiben und im Handel erhältlich. Einkomponentensysteme sind bei dem gegebenenfalls erfolgenden Verkleben des Rahmens mit den Profil aus Organopolysiloxan-Elastomer bevorzugt.

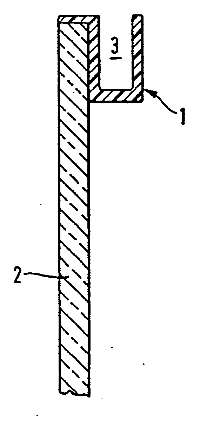

## Patentansprüche

1. Durch Organopolysiloxan-Elastomer gebildete Verbindung einer Fensterscheibe mit dem Rahmen, insbesondere einer Fahrzeugkarosserie, dadurch gekennzeichnet, daß sie aus einem, vor dem Einsetzen der Fensterscheibe (2) in den Rahmen auf dieser Scheibe (2) vernetzten und am Rand dieser Scheibe (2) befindlichen Profil (1) aus Organopolysiloxan-Elastomer mit einer nach außen geöffneten Nut (3) in die der Rahmen eingesetzt und in der gegebenenfalls dieser Rahmen mit dem Profil als Organopolysiloxan-Elastomer durch bei Raumtemperatur zu einem Elastomeren vernetzbaren Organopolysiloxanmasse verklebt ist, besteht.

2.

Verbindung nach Anspruch 1. dadurch gekennzeichnet, daß das Profil (1) aus bei erhöhter Temperatur durch Anlagerung von Si-gebundenem Wasserstoff an aliphatische Mehrfachbindung oder mittels freier Radikale vernetztem Polysiloxan besteht.

## Claims

1. Connection of a window pane to the frame, especially of a vehicle body, which connection is formed by an organopolysiloxane elastomer, characterised in that it comprises a profile (1) which comprises an organopolysiloxane elastomer and is cross-linked on the window pane (2) before this pane (2) is inserted into the frame, and is located at the edge of this pane (2), and has a groove (3), open to the outside, into which the frame is inserted and in which this frame is optionally adhesively bonded to the profile comprising an organopolysiloxane elastomer by means of an organopolysiloxane material that can be cross-linked at room temperature to give an elastomer.

2. Connection according to claim 1, characterised in that the profile (1) comprises a polysiloxane that is cross-linked at elevated temperature by the addition of Si-bonded hydrogen to an aliphatic multiple bond or by means of free radicals.

## Revendications

1. Liaison formée par un polyorganosiloxane élastomère, entre une vitre de fenêtre et son châssis, plus particulièrement pour une carrosserie d'automobile, liaison caractérisée en ce qu'elle est constituée d'un profilé (1) en un polyorganosiloxane élastomère qui a été réticulé sur la vitre (2) avant la mise en place de celle-ci dans le châssis et qui se trouve sur le bord de ladite vitre (2), profilé qui présente une rainure (3), ouverte vers l'extérieur, dans laquelle le châssis est introduit et dans laquelle, le cas échéant, ce châssis est collé avec le profilé en polyorganosiloxane élastomère au moyen d'une matière polyorganosiloxanique capable de se réticuler à la température ambiante en donnant un élastomère.

2. Liaison selon la revendication 1 caractérisée en ce que le profilé (1) est en un polyorganosiloxane qui a été réticulé à température élevée, par fixation, sur des liaisons multiples aliphatiques, d'hydrogène porté par Si, ou au moyen de radicaux libres.